# FASCICULE DE BREVET EUROPEEN

(11) **EP 0 606 176 B1**
(45) Date de publication et mention de la délivrance du brevet: **17.11.1999**
(21) Numéro de dépôt: 94400010.8
(22) Date de dépôt: 04.01.1994
(51) Int. Cl.: G01T 3/06, G01T 1/20

(54) **Dispositif de détection simultanée et sélective de neutrons et de photons X ou gamma par atténuation**
Vorrichtung zum gleichzeitigen und selektiven Nachweis von Neutronen und Röntgen- oder Gamma-Photonen durch Abschwächung
Device for detecting neutrons and X or Gamma photons simultaneously and selectively by attenuation

(30) Priorité: 06.01.1993 FR 9300055
(43) Date de publication de la demande: 13.07.1994
(73) Titulaire: Geoservices, 93151 Le Blanc-Mesnil (FR)
(72) Inventeur: Szabo, Jean-Louis, F-93170 Bagnolet (FR); Daniel, Georges, F-91120 Palaiseau (FR)
(74) Mandataire: Dubois-Chabert, Guy

(56) Documents cités:
- WO-A-93/01507
- US-A- 3 566 118
- US-A- 3 988 586
- US-A- 4 247 774
- IEEE TRANS ON NUCLEAR SCIENCE, vol.37, no.3, Juin 1990, NEW YORK USA pages 1348 - 1350 CHILES M M ET AL. 'multi-energy neutron detector for counting thermal neutrons, high-energy neutrons, and gamma photons seperately.'

## Description

L'invention se rapporte au domaine de la détection simultanée et sélective de flux de neutrons et de photons X ou gamma, en particulier pour la diagraphie nucléaire et les mesures de taux de combustion sur les assemblages combustibles irradiés.

La détection de neutrons en présence d'un flux important de photons gamma a toujours été difficile.

L'un des procédés utilisés dans l'art antérieur consiste à employer des détecteurs tels que les compteurs proportionnels au ¹⁰BF₃, ³He, intrinsèquement perturbés par de forts débits de doses X ou gamma, et à les entourer d'un blindage efficace vis-à-vis de ces rayonnements.

Un autre procédé consiste à utiliser des chambres à fission insensibles à ces rayonnements mais dont l'efficacité pour les neutrons est faible.

Il est souvent nécessaire de détecter simultanément les émissions de neutrons et de photons X ou gamma issues d'une source de radiations.

Ceci est généralement accompli dans l'art antérieur en utilisant deux détecteurs, l'un pour les neutrons, l'autre pour les photons X ou gamma.

L'art antérieur dans ce domaine peut être illustré par exemple par les documents FR-A-2 317 668 et DE-A-1 564 271.

Dans ces deux documents il est question d'un appareillage qui utilise effectivement deux détecteurs l'un pour les neutrons et l'autre pour les photons, engendrant l'un et l'autre des photons visibles par scintillation, ces deux détecteurs étant associés à un même photomultiplicateur.

Tout le problème de cette détection sélective consiste par conséquent à mettre en oeuvre les moyens qui permettent, parmi les scintillations prises en compte par le photomultiplicateur, d'obtenir une sélection de celles qui sont dues aux neutrons et de celles qui sont dues aux photons X ou gamma.

Dans l'art antérieur, la sélection des scintillations relatives respectivement à ces deux catégories de rayonnement est effectuée à la sortie du scintillateur par un traitement du signal utilisant les caractéristiques particulières et distinctives de ces mêmes scintillations selon qu'elles sont dues aux neutrons ou aux photons.

Pour l'essentiel, cette discrimination est réalisée soit sur le temps de montée des impulsions (dans le document FR-A-2 317 668), soit sur les différences de temps de décroissance des impulsions émises par les deux scintillateurs (cas du document DE-A-1 564 271).

Dans un cas comme dans l'autre, cette phase de traitement du signal conduit à une électronique spectrométrique complexe et à un matériel coûteux.

Un autre document, "United States Statutory Invention Registration" n°H590, décrit un détecteur à scintillations, sensible à la fois aux neutrons et aux rayons gamma grâce à la présence de deux scintillateurs, l'un externe pour les neutrons thermiques et l'autre interne pour les neutrons rapides et les photons gamma.

Toutefois, comme dans l'art antérieur précédent, la discrimination est faite dans la chaîne électronique de sortie par des mesures de forme des impulsions et comptage de celles-ci une par une après sélection, donc par des appareillages complexes et coûteux.

C'est pourquoi, dans ce détecteur, le scintillateur sensible aux photons gamma est un scintillateur en plastique, inapte, par nature, à délivrer des pics photoélectriques utilisables en spectrométrie d'amplitude.

La présente invention a précisément pour objet un dispositif de détection simultanée et sélective de neutrons et de photons X ou gamma permettant à l'aide de moyens dont la mise en oeuvre est simple, de séparer complètement les deux types de scintillation en utilisant une seule chaîne de mesure spectrométrique à deux canaux d'énergie dont chacune correspond à l'un des deux types de scintillation à séparer.

EP-A1-593643, correspondant à WO-A1-93-1507, est cité au titre de l'Art. 56(4) CBE. Ce document montre un convertisseur de longueur d'onde 7 à la figure 1.

Le dispositif objet de l'invention, comprenant un détecteur qui comporte :
- un premier scintillateur qui est sensible aux neutrons et qui ne produit pas de photons X ou gamma par interaction avec ces neutrons, et
- un deuxième scintillateur qui est sensible aux photons X ou gamma, ce détecteur étant destiné à être associé à un moyen photomultiplicateur, est caractérisé en ce que le deuxième scintillateur est inorganique et monocristallin, en ce que le dispositif comprend en outre un moyen de guidage et d'atténuation prévu pour
- d'une part guider, vers le moyen photomultiplicateur, les photons lumineux qui sont engendrés par le premier scintillateur sous l'impact des neutrons, et
- d'autre part diminuer l'intensité du rayonnement constitué par ces photons qui sont engendrés par le premier scintillateur,
ce moyen de guidage et d'atténuation décalant ainsi vers les basses énergies le spectre d'amplitude des scintillations dues aux neutrons, qui est fourni par le moyen photomultiplicateur, et en ce que le premier scintillateur, le deuxième scintillateur et le moyen de guidage et d'atténuation sont choisis de façon que les scintillations dues aux neutrons et le pic photoélectrique des scintillations dues aux photons X ou gamma se situent dans des bandes d'énergie nettement séparées d'une part l'une de l'autre et d'autre part du bruit de fond électronique du moyen photomultiplicateur.

Comme premier scintillateur, on peut utiliser un scintillateur fait d'un verre qui induit des réactions (n, alpha), par exemple un verre dopé au lithium 6.

Dans ce cas, les neutrons thermiques sont détectés par l'intermédiaire de la réaction ( n, alpha) du lithium 6.

La particule alpha et le triton issus de la réaction sont émis dans des directions opposées avec des énergies de 2,05MeV et 2,74MeV, respectivement.

Du fait que le libre parcours moyen des neutrons thermiques est généralement de l'ordre du millimètre pour le verre, on peut obtenir des rendements de détection des neutrons très élevés avec des épaisseurs de verre relativement faibles.

D'autre part, on obtient une très bonne protection du scintillateur X ou gamma grâce à l'absence de photons gamma de capture dans l'interaction neutrons/lithium 6.

L'utilisation d'un scintillateur inorganique et monocristallin en tant que deuxième scintillateur, permet à celui- ci de délivrer un pic photoélectrique utilisable avec une chaîne spectrométrique.

Ce deuxième scintillateur peut utiliser une matière scintillante choisie dans le groupe comprenant le germanate de bismuth (BGO), l'iodure de césium (CsI), le fluorure de césium (CsF), l'iodure de sodium (NaI) et l'orthosilicate de gadolinium (GSO).

Les dimensions du deuxième scintillateur sont calculées en fonction des énergies des photons X ou gamma incidents et des coefficients massiques d'absorption de ce deuxième scintillateur afin d'obtenir le meilleur rendement possible.

Le moyen de guidage et d'atténuation peut être placé entre le premier scintillateur et le deuxième scintillateur.

De préférence, le dispositif objet de l'invention comprend en outre un moyen d'absorption des neutrons qui est prévu pour protéger de ces neutrons le deuxième scintillateur.

Selon un mode de réalisation particulier du dispositif objet de l'invention, le moyen de guidage et d'atténuation est placé entre le premier scintillateur et le deuxième scintillateur et le moyen d'absorption des neutrons est placé entre le moyen de guidage et d'atténuation et le deuxième scintillateur.

On notera que l'invention porte essentiellement sur des moyens de séparation, en deux bandes d'énergie nettement distinctes, des scintillations relatives à chacun des deux types de rayonnement étudiés.

Le demandeur a mis en évidence que par l'emploi d'un moyen de guidage et d'atténuation et éventuellement d'un moyen d'absorption des neutrons, et par un choix judicieux des matériaux scintillateurs et du moyen de guidage et d'atténuation, il était possible de localiser précisément et dans deux bandes d'énergie séparées l'une de l'autre et du bruit de fond, les scintillations dues aux photons X ou gamma et les scintillations dues aux neutrons.

Le moyen de guidage et d'atténuation peut être accordé sur la bande des énergies moyennes des scintillations lumineuses du scintillateur sensible aux neutrons pour convertir cette bande en une bande similaire dans un domaine d'énergie nettement séparé de la bande d'émission du scintillateur sensible aux photons X ou gamma et du bruit de fond électronique du moyen photomultiplicateur.

L'avantage considérable qui résulte de l'utilisation de l'invention réside dans le fait que, les deux canaux de scintillation étant identifiés et nettement séparés, la chaîne de mesure spectrométrique peut être grandement simplifiée et constituée par un matériel standard d'un coût peu élevé.

La présente invention a également pour objet un système de détection simultanée et sélective de neutrons et de photons X ou gamma, ce système étant caractérisé en ce qu'il comprend :
- le dispositif qui fait également l'objet de l'invention,
- un réflecteur de lumière de faible épaisseur, transparent aux neutrons et aux photons X ou gamma, qui recouvre le dispositif et dont la surface réfléchissante est tournée vers ce dernier,
- une enceinte de confinement optique recouvrant ce réflecteur de lumière et assurant l'étanchéité du dispositif vis- à-vis de l'extérieur,
- un moyen photomultiplicateur associé au détecteur du dispositif,
- un coupleur optique au travers duquel le moyen photomultiplicateur est associé au détecteur, et
- une chaîne de mesure spectrométrique à deux canaux, située à la sortie du moyen photomultiplicateur et effectuant séparément dans chaque canal le comptage respectivement des scintillations dues aux neutrons et des scintillations dues aux photons X ou gamma.

Enfin, le moyen photomultiplicateur peut être soit un photomultiplicateur au sens habituel du terme, soit une photodiode.

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue en coupe longitudinale schématique d'un mode de réalisation particulier du système de détection objet de l'invention, et
- la figure 2 est un dessin du spectre d'amplitude des scintillations dues à des neutrons et à des photons X ou gamma, montrant la disposition respective des différents pics et obtenu avec un dispositif conforme à l'invention.

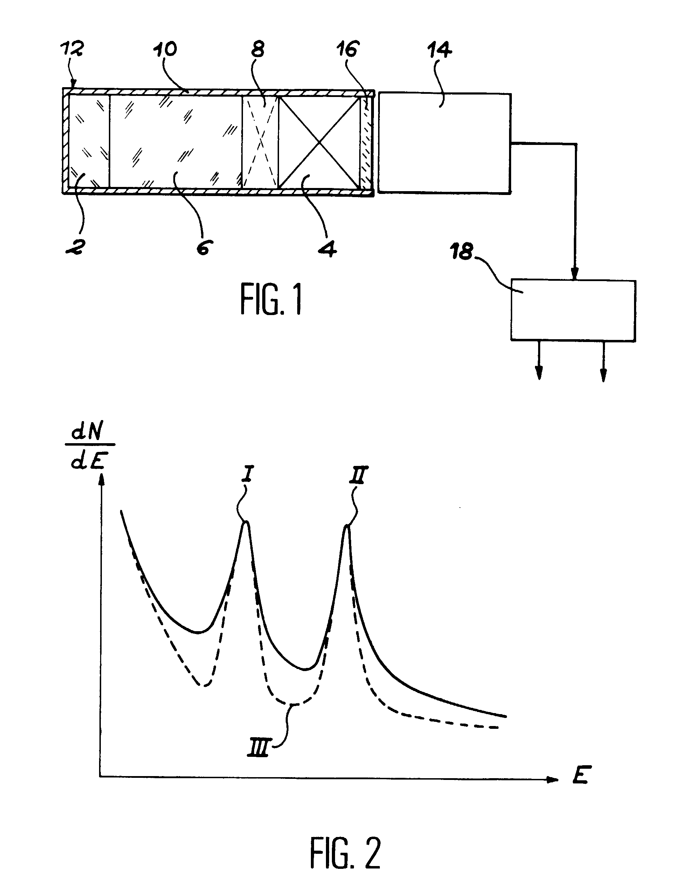

Sur la figure 1, on a représenté schématiquement un système conforme à l'invention et on voit sur cette figure :
- un premier scintillateur 2 en verre dopé au lithium 6,
- un deuxième scintillateur 4 sensible aux photons X ou gamma, le scintillateur 2 servant de scintillateur sensible aux neutrons et servant aussi de protection du scintillateur 4 vis-à- vis des neutrons qui se propagent suivant l'axe commun aux scintillateurs 2 et 4 et qui peuvent interagir avec le scintillateur 4,
- un guide de lumière 6 qui est placé entre les scintillateurs 2 et 4 et qui contribue à réaliser une distribution des pics de scintillation des neutrons d'une part et des photons X ou gamma d'autre part dans des canaux d'énergie distincts ainsi qu'on l'expliquera plus loin,
- éventuellement, un moyen d'absorption de neutrons ou filtre de neutrons 8, par exemple en verre dopé au lithium 6, qui est placé entre le guide 6 et le scintillateur 4, et qui assure une protection supplémentaire, vis-à-vis des neutrons, du scintillateur de photons X ou gamma 4.

L'ensemble est enfermé dans une enveloppe réflectrice 10 dont la partie réfléchissante est tournée vers les scintillateurs de façon à éviter toute perte d'énergie lumineuse par fuite vers l'extérieur.

Enfin, l'enveloppe réflectrice 10 est à son tour enfermée dans une enceinte de confinement mécanique et optique 12 qui assure l'étanchéité de l'ensemble vis-à-vis de l'extérieur.

Bien entendu, il convient que les matériaux constitutifs du scintillateur 4, du guide 6 et du filtre 8 soient aptes à transmettre la lumière engendrée par interaction des neutrons avec le scintillateur 2.

Sur la figure 1, on voit également un photomultiplicateur 14 et un coupleur optique 16 qui assure la bonne transmission des scintillations lumineuses, provenant des scintillateurs, vers ce photomultiplicateur 14.

Le guide de lumière 6 d'une part guide, en direction du photomultiplicateur, la lumière engendrée par interaction des neutrons avec le scintillateur 2 (cette lumière atteignant le photomultiplicateur après avoir traversé le filtre 8, le scintillateur 4 et le coupleur 16) et d'autre part atténue cette lumière (d'autant plus que ce guide est plus long), d'où un décalage vers les basses énergies, du spectre d'amplitude des scintillations dues aux neutrons, qui est fourni par le photomultiplicateur.

Enfin, à la sortie du photomultiplicateur 14 se trouve une chaîne de mesure spectrométrique 18 à deux canaux préréglés une fois pour toutes sur les deux bandes d'énergies dans lesquelles le système restitue les informations de comptage des scintillations.

Sur la figure 2, on a représenté les spectres d'amplitude des scintillations dues aux neutrons (spectre I) et aux photons X ou gamma (spectre II) pour un dispositif conforme à l'invention du genre de celui de la figure 1 mais sans filtre de neutrons.

Le nombre dN/dE d'impulsions comptées par unité d'énergie est représenté en ordonnées et l'énergie E est représentée en abscisses.

La courbe III en pointillés est relative aux spectres résultant de l'adjonction d'un filtre de neutrons à ce dispositif.

On voit que ce filtre de neutrons permet de diminuer le bruit de fond des spectres précédemment formés.

On revient maintenant sur le dispositif.

Le spectre dû au scintillateur de photons X ou gamma possède un pic que l'on ne cherche pas à modifier.

Ce scintillateur est initialement choisi de façon que le pic correspondant soit au-delà de celui qui correspond à l'ensemble scintillateur sensible aux neutrons-guide de lumière.

Alors par un ajustement adéquat du guide de lumière et l'éventuelle utilisation d'un filtre de neutrons (par exemple en verre dopé au lithium 6) qui peut diminuer le bruit de fond parasite (neutrons) du scintillateur sensible aux photons X ou gamma, on peut obtenir que le pic des scintillations dues aux neutrons soit situé dans un canal d'énergie nettement différencié de celui du pic dû aux photons X ou gamma.

On notera qu'en modifiant l'épaisseur ou longueur, du guide on modifie la position du pic dû aux neutrons (en conservant la même surface sous ce pic) ainsi, on voit qu'il est possible d'écarter ce pic de celui qui est dû aux photons X ou gamma.

On notera également que le filtre de neutrons absorbe aussi une certaine fraction de l'intensité du rayonnement lumineux engendré dans le scintillateur en verre dopé au ⁶Li par interaction avec les neutrons, et que ce filtre de neutrons participe, avec le guide de lumière, avec un effet moindre, au décalage en énergie du spectre des scintillations dues aux neutrons.

La photocathode du photomultiplicateur participe aussi à ce décalage, suivant la courbe de réponse de cette photocathode.

Il est alors clair qu'il suffit d'une chaîne spectrométrique à deux canaux pour effectuer le comptage du nombre des scintillations dues à chaque type de rayonnement.

De plus, ceci peut être réalisé à l'aide d'un matériel standard, préréglé une fois pour toutes, et beaucoup plus simple et moins coûteux que les dispositifs de traitement du signal qu'on utilisait dans l'art antérieur pour faire la sélection entre les deux origines des scintillations simultanées.

A titre purement indicatif et nullement limitatif, un dispositif conforme à l'invention peut comprendre :
- un scintillateur en verre dopé au ⁶Li dont le diamètre vaut 1"1/2 (38mm) et dont l'épaisseur vaut 2mm,
- un guide en verre dont le diamètre vaut 1''1/2 (38mm) et dont l'épaisseur peut être fixée entre 100 mm et 150mm,
- un scintillateur en BGO, dont le diamètre vaut 1"1/2 (38mm) et dont l'épaisseur vaut 1'' (25,4mm) ,
- éventuellement un filtre de neutrons en verre dopé au ⁶Li, dont le diamètre vaut 38mm et dont l'épaisseur vaut 2mm.

L'invention trouve un grand nombre d'applications possibles telles que, par exemple :
- les mesures simultanées qui font intervenir des interactions des neutrons et des photons X ou gamma avec la matière, dans les domaines industriel, géologique et minier (jauges de densité/humidité, grammage/humidité, épaisseur/humidité, diagraphies neutrons et/ou gamma),
- la surveillance des mouvements des assemblages de combustible irradié dans les usines de retraitement,
- la mesure du taux de combustion des assemblages irradiés,
- la fabrication d'éléments combustibles nucléaires,
- le retraitement d'éléments combustibles nucléaires irradiés,
- les usines d'enrichissement, et
- d'une manière générale, toute mesure dans laquelle des neutrons et des photons X ou gamma sont associés avec un besoin de comptabilisation séparée.

## Revendications

1. Dispositif de détection simultanée et sélective de neutrons et de photons X ou gamma, ce dispositif comprenant un détecteur qui comporte :
- un premier scintillateur (2) qui est sensible aux neutrons et qui ne produit pas de photons X ou gamma par interaction avec ces neutrons, et
- un deuxième scintillateur (4) qui est sensible aux photons X ou gamma,
ce détecteur étant destiné à être associé à un moyen photomultiplicateur (14),
le dispositif étant caractérisé en ce que le deuxième scintillateur (4) est inorganique et monocristallin, en ce que le dispositif comprend en outre un moyen de guidage et d'atténuation (6) prévu pour
- d'une part guider, vers le moyen photomultiplicateur (14), les photons lumineux qui sont engendrés par le premier scintillateur (2) sous l'impact des neutrons, et
- d'autre part diminuer l'intensité du rayonnement constitué par ces photons qui sont engendrés par le premier scintillateur,
ce moyen de guidage et d'atténuation décalant ainsi vers les basses énergies le spectre d'amplitude des scintillations dues aux neutrons, qui est fourni par le moyen photomultiplicateur, et en ce que le premier scintillateur (2), le deuxième scintillateur (4) et le moyen de guidage et d'atténuation (6) sont choisis de façon que les scintillations dues aux neutrons et le pic photoélectrique des scintillations dues aux photons X ou gamma se situent dans des bandes d'énergie nettement séparées d'une part l'une de l'autre et d'autre part du bruit de fond électronique du moyen photomultiplicateur.

2. Dispositif selon la revendication 1, caractérisé en ce que le premier scintillateur (2) est fait d'un verre qui induit des réactions (n, alpha).

3. Dispositif selon l'une quelconque des revendications 1 et 2, caractérisé en ce que le deuxième scintillateur (4) utilise une matière scintillante choisie dans le groupe comprenant le germanate de bismuth (BGO), l'iodure de césium (CsI), le fluorure de césium (CsF), l'iodure de sodium (NaI) et l'orthosilicate de gadolinium (GSO).

4. Dispositif selon l'une quelconque des revendications 1 à 3, caractérisé en ce que le moyen de guidage et d'atténuation (6) est placé entre le premier scintillateur et le deuxième scintillateur.

5. Dispositif selon l'une quelconque des revendications 1 à 4, caractérisé en ce qu'il comprend en outre un moyen (8) d'absorption des neutrons qui est prévu pour protéger de ces neutrons le deuxième scintillateur (4).

6. Dispositif selon la revendication 5, caractérisé en ce que le moyen de guidage et d'atténuation (6) est placé entre le premier scintillateur (2) et le deuxième scintillateur (4) et en ce que le moyen (8) d'absorption des neutrons est placé entre le moyen de guidage et d'atténuation (6) et le deuxième scintillateur (4).

7. Système de détection simultanée et sélective de neutrons et de photons X ou gamma, ce système étant caractérisé en ce qu'il comprend :
- le dispositif selon l'une quelconque des revendications 1 à 6,
- un réflecteur de lumière de faible épaisseur (10), transparent aux neutrons et aux photons X ou gamma, qui recouvre le dispositif et dont la surface réfléchissante est tournée vers ce dernier,
- une enceinte de confinement optique (12) recouvrant le réflecteur de lumière et assurant l'étanchéité du dispositif vis-à-vis de l'extérieur,
- un moyen photomultiplicateur (14) associé au détecteur du dispositif,
- un coupleur optique (16) au travers duquel le moyen photomultiplicateur est associé au détecteur, et
- une chaîne de mesure spectrométrique (18) à deux canaux, située à la sortie du moyen photomultiplicateur et effectuant séparément dans chaque canal le comptage respectivement des scintillations dues aux neutrons et des scintillations dues aux photons X ou gamma.

8. Dispositif selon la revendication 2, dans lequel ledit verre est un verre dopé au lithium 6.

## Patentansprüche

1. Vorrichtung zum gleichzeitigen und selektiven Nachweis von Neutronen und Röntgen- oder Gamma-Photonen, wobei diese Vorrichtung einen Detektor enthält, der umfaßt:
- einen ersten Szintillator (2), der empfindlich für Neutronen ist und nicht durch Wechselwirkung mit diesen Neutronen Röntgen-oder Gamma-Photonen erzeugt, und
- einen zweiten Szintillator (4), der empfindlich für Röntgen-oder Gamma-Photonen ist,
und dieser Detektor dazu bestimmt ist, einer Photovervielfacher-Einrichtung (14) zugeordnet zu werden,
wobei diese Vorrichtung
**dadurch gekennzeichnet** ist, daß der zweite Szintillator (4) anorganisch und monokristallin ist, und dadurch, daß sie außerdem eine Leit- und Abschwächungseinrichtung (6) umfaßt, vorgesehen um
- einerseits die leuchtenden Photonen, die durch den ersten Szintillator (2) unter dem Aufprall der Neutronen erzeugt werden, zu der Photovervielfacher-Einrichtung (14) zu leiten, und
- andererseits die Stärke der Strahlung abzuschwächen, die durch diese Photonen gebildet wird, die durch den ersten Szintillator erzeugt werden,
wobei diese Leit- und Abschwächungseinrichtung also das durch die Photovervielfacher-Einrichtung gelieferte Amplitudenspektrum der durch die Neutronen verursachten Szintillationen in Richtung niedriger Energien verschiebt, und dadurch, daß der erste Szintillator (2), der zweite Szintillator (4) und die Leit- und Abschwächungseinrichtung (6) so ausgewählt werden, daß die durch die Neutronen verursachten Szintillationen und das photoelektrische Peak der durch die Röntgen- oder Gamma-Photonen verursachten Szintillationen sich in Energiebändern befinden, die deutlich getrennt sind, einerseits voneinander und andererseits von dem elektronischen Grundgeräusch der Photovervielfacher-Einrichtung.

2. Vorrichtung nach Anspruch 1, dadurch gekennzeichnet, daß der erste Szintillator (2) aus einem Glas hergestellt ist, das Reaktionen (n, alpha) induziert.

3. Vorrichtung nach einem der Ansprüche 1 und 2, dadurch gekennzeichnet, daß der zweite Szintillator (4) ein szintillierendes Material benutzt, ausgewählt aus der Gruppe, die Wismut-Germanat(IV) (BGO), Cäsiumiodid (CsI), Cäsiumfluorid (CsF), Natriumiodid (NaI) und Gadoliniumorthosilikat (GSO) umfaßt.

4. Vorrichtung nach einem der Ansprüche 1 bis 3, dadurch gekennzeichnet, daß die Leit- und Abschwächungseinrichtung (6) zwischen dem ersten Szintillator und dem zweiten Szintillator angeordnet ist.

5. Vorrichtung nach einem der Ansprüche 1 bis 4, dadurch gekennzeichnet, daß sie außerdem eine Neutronenabsorptionseinrichtung (8) umfaßt, die dazu vorgesehen ist, den zweiten Szintillator (4) vor diesen Neutronen zu schützen.

6. Vorrichtung nach Anspruch 5, dadurch gekennzeichnet, daß die Leit- und Abschwächungseinrichtung (6) zwischen dem ersten Szintillator (2) und dem zweiten Szintillator (4) angeordnet ist, und daß die Neutronenabsorptionseinrichtung (8) zwischen der Leit - und Abschwächungseinrichtung (6) und dem zweiten Szintillator (4) angeordnet ist.

7. System zur simultanen und selektiven Detektion von Neutronen und Rönten- oder Gamma-Photonen, wobei dieses System dadurch gekennzeichnet ist, daß es umfaßt:
- die Vorrichtung nach einem der Ansprüche 1 bis 6,
- einen Lichtreflektor von geringer Dicke (10), durchlässig für die Neutronen und die Röntgen- oder Gamma-Photonen, der die Vorrichtung bedeckt und dessen reflektierende Oberfläche dieser letzteren zugewandt ist,
- eine Hülle 12 zur optischen Einschließung, die den Lichtreflektor überzieht und die Dichtheit der Vorrichtung gegenüber der Außenseite sicherstellt,
- eine dem Detektor der Vorrichtung zugeordnete Photovervielfacher-Einrichtung (14),
- einen optischen Koppler (16), durch den hindurch die Photovervielfacher-Einrichtung dem Detektor zugeordnet ist, und
- eine spektrometrische Meßkette (18) mit zwei Kanälen, am Ausgang der Photovervielfacher-Einrichtung befindlich, die getrennt in jedem Kanal die Zählung jeweils der durch die Neutronen verursachten Szintillationen und der durch die Röntgen- und Gamma-Photonen verursachten Szintillationen durchführt.

8. Vorrichtung nach Anspruch 2, bei der das genannte Glas ein mit Lithium dotiertes Glas 6 ist.

## Claims

1. Apparatus for the simultaneous, selective detection of neutrons and X or gamma photons, said apparatus comprising a detector incorporating: a first scintillator (2) which is sensitive to neutrons and which does not produce X or gamma photons by interaction with said neutrons and a second scintillator (4) sensitive to X or gamma photons, said detector being associated with a photomultiplier means (14), characterized in that the second scintillator (4) is inorganic and monocrystalline and the apparatus also has a guidance and attenuation means (6) for on the one hand guiding to the photomultiplier means (14) the light photons, which are produced by the first scintillator (2) under the impact of neutrons and on the other hand reducing the intensity of the radiation constituted by said photons, which are produced by the first scintillator, said guidance and attenuation means thus shifting towards the low energies the amplitude spectrum of the scintillations due to the neutrons supplied by the photomultiplier means and in that the first scintillator (2), the second scintillator (4) and the guidance and attenuation means (6) are chosen in such a way that the scintillations due to the neutrons and the photoelectric peak of the scintillations due to the X or gamma photons are in energy bands clearly separated on the one hand from one another and on the other from the electronic background noise of the photomultiplier means.

2. Apparatus according to claim 1, characterized in that the first scintillator (2) is made from glass, which induces reactions (n, alpha).

3. Apparatus according to either of the claims 1 and 2, characterized in that the second scintillator (4) uses a scintillating material chosen from within the group including bismuth germanate (BGO), cesium iodide (CsI), cesium fluoride (CsF), sodium iodide (NaI) and gadolinium orthosilicate (GSO).

4. Apparatus according to any one of the claims 1 to 3, characterized in that the guidance and attenuation means (6) is placed between the first scintillator and the second scintillator.

5. Apparatus according to any one of the claims 1 to 4, characterized in that it also comprises a neutron absorption means (8) for protecting the second scintillator (4) against said neutrons.

6. Apparatus according to claim 5, characterized in that the guidance and attenuation means (6) is placed between the first scintillator (2) and the second scintillator (4) and in that the neutron absorption means (8) is placed between the guidance and attenuation means 96) and the second scintillator (4).

7. System for the simultaneous, selective detection of neutrons and X or gamma photons, said system being characterized in that it comprises the apparatus according to any one of the claims 1 to 6, a light reflector (10) of limited thickness, which is transparent to neutrons and to X or gamma photons, which covers the apparatus and whose reflecting surface is turned towards the latter, an optical confinement enclosure (12) covering said light reflector and ensuring the sealing of the apparatus with respect to the outside, a photomultiplier means (14) associated with the detector of the apparatus, an optical coupler (16) through which the photomultiplier means is associated with the detector and a dual channel spectrometric measuring system (18) located at the outlet of the photomultiplier means and separately performing in each channel the respective counting of the scintillations due to the neutrons and the scintillations due to the X or gamma photons.

8. Apparatus according to claim 2, wherein said glass is doped with lithium 6.
